# EUROPÄISCHE PATENTSCHRIFT

(11) **EP 0 984 145 B1**
(45) Veröffentlichungstag und Bekanntmachung des Hinweises auf die Patenterteilung: **25.09.2002**
(21) Anmeldenummer: 99113894.2
(22) Anmeldetag: 16.07.1999
(51) Int. Cl.: F02B 29/04, F02B 33/36, F02B 33/44, F02B 75/22, F02B 67/10, F02M 35/116

(54) **Brennkraftmaschine in V-Bauweise mit einem mechanisch angetriebenen Lader**
V type internal combustion engine with mechanically driven supercharger
Moteur à combustion interne en V avec un surcompresseur à entrainement mécanique

(30) Priorität: 05.09.1998 DE 19840616
(43) Veröffentlichungstag der Anmeldung: 08.03.2000
(73) Patentinhaber: DaimlerChrysler AG, 70567 Stuttgart (DE)
(72) Erfinder: Eiermann, Georg, 70736 Fellbach (DE); Rau, Erhard, 73235 Weilheim (DE)

(56) Entgegenhaltungen:
- EP-A- 0 529 639
- US-A- 3 881 455
- US-A- 4 028 892
- US-A- 5 309 886
- PATENT ABSTRACTS OF JAPAN vol. 014, no. 155 (M-0954), 26. März 1990 (1990-03-26) & JP 02 016334 A (HONDA MOTOR CO LTD), 19. Januar 1990 (1990-01-19)

## Beschreibung

Die Erfindung betrifft eine Brennkraftmaschine in V-Bauweise mit einem mechanisch angetriebenen Lader nach dem Oberbegriff des Anspruches 1.

Eine Brennkraftmaschine dieser Art ist aus der EP 0 529 639 B1 bekannt. Zwischen den beiden V-förmig angeordneten Zylinderbänken der Brennkraftmaschine befindet sich ein mechanisch über die Kurbelwelle angetriebener Lader, der die angesaugte Verbrennungsluft auf einen erhöhten Ladedruck komprimiert. Über dem Lader ist ein Ladeluftkühler angeordnet, in dem die komprimierte Ladeluft stromab des Laders gekühlt wird. Die gekühlte Ladeluft wird über Saugrohre den Lufteinlässen der Zylinder zugeführt .

Den beiden Zylinderbänken ist jeweils ein Luftsammler zugeordnet, die jeweils über Verbindungsrohre mit dem Ladeluftkühler verbunden sind und mit Ladeluft gespeist werden. Die beiden Luftsammler verlaufen in Längsrichtung der Zylinderbänke oberhalb der Zylinderköpfe. Von den Luftsammlern verzweigen die Saugrohre zu den Lufteinlässen der Zylinder.

Dieses System mechanischer Aufladung besteht aus einer Vielzahl von Einzelteilen, die bei der Motormontage zusammengesetzt werden und deren Funktionstüchtigkeit erst nach Beendigung der Montage erprobt werden kann. Dies hat zur Folge, daß Fehlfunktionen einzelner Bauteile zu einer zeit- und kostenaufwendigen Nachbesserung führen, während der die Fertigstellung des Motors blockiert ist.

Ein weiterer Nachteil liegt darin, daß eine Mehrzahl von langen Verbindungsrohren zum Überleiten der Verbrennungsluft zwischen dem Lader, dem Ladeluftkühler, den Luftsammlern und den Lufteinlässen der Zylinder erforderlich ist, wodurch lange Strömungswege mit entsprechenden Verlusten und verzögerter Dynamik entstehen. Insbesondere im Instationärbetrieb der Brennkraftmaschine hat dies hohe Ansprechzeiten zur Folge. Außerdem benötigt das System einen großen Bauraum und ist unhandlich in der Montage.

Eine weitere V-förmige Brennkraftmaschine ist aus der US 40 28 892 bekannt, die ebenfalls einen zwischen den Zylinderbänken angeordneten Lader offenbart, der oberhalb eines Ladeluftkühlers angeordnet ist, welcher am Grund der V-Form zwischen den Zylinderbänken befestigt ist. Nach Durchströmen des Ladeluftkühlers wird die Ansaugluft einer Luftkammer zugeführt, die mit den Lufteinlässen der Zylinder kommuniziert. Die Luftkammer ist in den Motorblock integriert und schließt die Zylinder der Brennkraftmaschine ein. Diese Bauweise zeichnet sich durch eine verhältnismäßig komplizierte Ausführung und einen hohen Herstellungsaufwand aus.

Der Erfindung liegt das Problem zugrunde, einen Verbrennungsmotor mit einer klein bauenden, leicht handhabbaren mechanischen Aufladung zu versehen, die sich durch ein agiles Ansprechverhalten auszeichnet.

Dieses Problem wird erfindungsgemäß mit den Merkmalen des Anspruches 1 gelöst.

Der Lader und der Ladeluftkühler bilden eine vormontierte Baueinheit, die vor dem Einbau in die Brennkraftmaschine auf ihre Funktionsfähigkeit geprüft werden kann, so daß eventuell vorhandene Fehler sofort festgestellt werden und aufwendige Nachbesserungsmaßnahmen entfallen. Die Teilevielfalt ist reduziert, die Montage gestaltet sich erheblich einfacher und schneller. Außerdem wird durch die Integration von Lader und Ladeluftkühler in eine gemeinsame Baueinheit deutlich weniger Bauraum benötigt, so daß dieses Aufladesystem auch für kleine Motoren eingesetzt werden kann.

Ein weiterer Vorteil liegt darin, daß sich der Ladeluftkühler unterhalb des Laders befindet und einen obenliegenden, zwischen Ladeluftkühler und Lader angeordneten Luftsammler aufweist. Der Luftsammler liegt in dieser Ausbildung in;der Mitte zwischen den beiden Zylinderbänken, so daß die Zylinder beider Zylinderbänke von einem einzigen, gemeinsamen Luftsammler mit Ladedruck versorgt werden. Der zentral angeordnete Luftsammler liegt zudem zweckmäßig etwa in gleicher Höhe wie die Zylinder-Lufteinlässe, so daß kurze Saugrohre zwischen dem Auslaß des Kühlers und den Einlässen der Zylinder ausreichen. Durch den zentralen Luftsammler und die kurzen Saugrohre werden Reibungsverluste und Strömungsverluste minimiert und die Dynamik des Systems positiv beeinflußt, das Ansprechverhalten des Aufladesystems ist verbessert.

Der Lufteintritt des Ladeluftkühlers ist vorteilhaft als Luftverteiler auf der Unterseite des Kühlers ausgebildet, wobei der Luftverteiler über eine nach unten geführte Ladeluftleitung, die durch eine zentrale Ausnehmung im Kühler nach unten zum Lufteinlaß des Kühlers geführt ist, mit dem Lader bzw. Kompressor verbunden ist und mit Ladeluft versorgt wird. Von der Unterseite des Kühlers aus wird die Ladeluft zur Kühlung durch den Kühler bis zu dessen Oberseite geführt und in den Luftsammler geleitet, der über die Saugrohre mit den Zylindereinlässen verbunden ist. Diese Ausführung garantiert eine kürzestmögliche Verbindung zwischen dem Luftsammler und den Zylindereinlässen.

Die Ladeluftleitung kann auf dem vorgefertigten Modul, bestehend aus Lader und Kühler, angeordnet sein, wodurch ein komplett vorgefertigtes, einsetzbares und austauschbares Modul gegeben ist. Auch die Saugrohre können Teil des vorgefertigten Moduls sein.

Weitere Vorteile und zweckmäßige Ausführungsformen sind den weiteren Ansprüchen, der Figurenbeschreibung und den Zeichnungen zu entnehmen. Es zeigen:
- Fig. 1: eine Vorderansicht einer V-förmigen Brennkraftmaschine mit mechanischem Lader,
- Fig. 2: eine Draufsicht auf die Brennkraftmaschine,
- Fig. 3: eine Seitenansicht der Brennkraftmaschine.

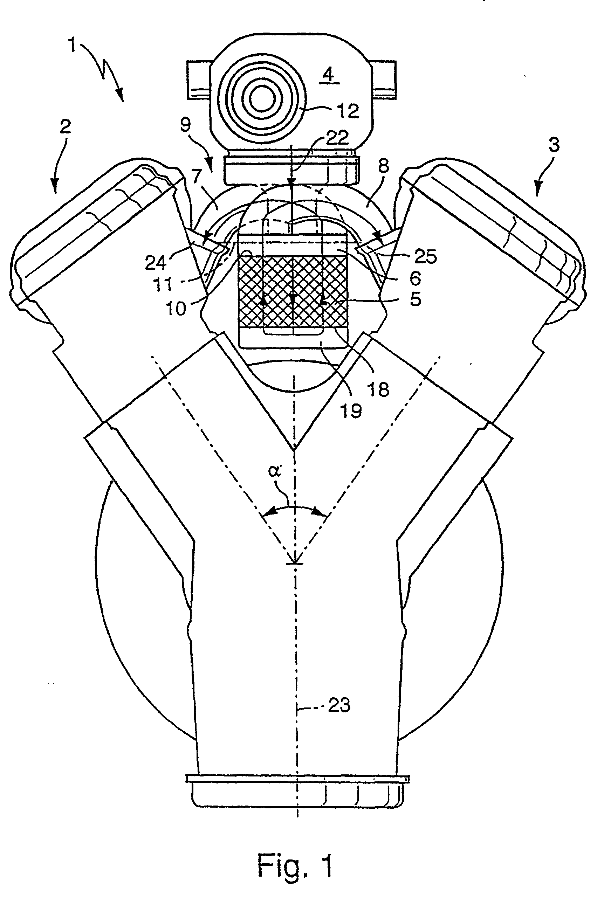

Gemäß Fig. 1 weist die Brennkraftmaschine 1 zwei V-förmig zueinander angeordnete Zylinderbänke 2, 3 auf, die einen Winkel α von mindestens etwa 60°, im Ausführungsbeispiel etwa 70°, einschließen. Die beiden Zylinderbänke 2, 3 sind spiegelsymmetrisch zu einer vertikalen Längsmittelebene 23 des Motors angeordnet, die Anzahl der Zylinder beträgt im Ausführungsbeispiel sechs; die Zylinderanzahl kann gegebenenfalls aber auch bei acht, zehn oder zwölf liegen.

Die Brennkraftmaschine 1 weist einen mechanischen, von der Kurbelwelle angetriebenen Lader bzw. Kompressor 4 auf, der Verbrennungsluft auf einen erhöhten Ladedruck verdichtet, welcher dem Einlaß der Zylinder zur Leistungs- und Drehmomentsteigerung zugeführt wird. In der gezeigten Darstellung wird dem Lader 4 die Verbrennungsluft über eine horizontal verlaufende Luftzufuhrleitung 12 zugeführt, die sich auf der gegenüberliegenden Seite einer Antriebsscheibe für den Lader 4 befindet.

Nach der Verdichtung im Lader 4 wird die Ladeluft in Pfeilrichtung 22 nach unten zu einem unterhalb des Laders 4 angeordneten Ladeluftkühler 5 geleitet, der benachbart zum V-Grund zwischen den beiden Zylinderbänken 2, 3 angeordnet ist. Die Ladeluft wird durch eine Ausnehmung im Ladeluftkühler 5 bis zu einem Luftverteiler 19 im Bereich der Unterseite 18 des Ladeluftkühlers 5 geführt und von dort zur Kühlung gleichmäßig nach oben durch den Kühlbereich des Ladeluftkühlers geleitet.

Auf der Oberseite 10 des Ladeluftkühlers 5 befindet sich ein Luftsammler 6, in den die gekühlte Ladeluft einströmt. Der Luftsammler 6 liegt zwischen dem obenliegenden Lader 4 und dem untenliegenden Ladeluftkühler 5, bildet jedoch einen Teil des Ladeluftkühlers. Über Saugrohre 7, 8 ist der Luftsammler 6 mit den Zylindereinlässen 24, 25 im Bereich der beiden Zylinderbänke 2, 3 verbunden.

Der Lader 4 und der Ladeluftkühler 5 bilden eine Baueinheit 9, die vormontiert und auf Funktionsfähigkeit geprüft zwischen den Zylinderbänken 2, 3 mit obenliegendem Lader 4 bzw. mit untenliegendem Ladeluftkühler 5 eingesetzt wird. Zur Baueinheit 9 gehören außerdem der dem Ladeluftkühler zugerechnete einlaßseitige Luftverteiler 19 auf der Unterseite und der auslaßseitige Luftsammler 6 auf der Oberseite. Zweckmäßig werden auch die Saugrohre 7, 8 auf der Baueinheit 9 vormontiert. Der Lader 4 und der Ladeluftkühler 5 sind symmetrisch zur Längsmittelebene 23 ausgebildet und angeordnet.

Der Luftsammler 6 und die Zylinder-Lufteinlässe 24, 25 im Bereich der beiden Zylinderbänke 2, 3 liegen in einer horizontalen, lotrecht zur Längsmittelebene 23 verlaufenden Ebene 11, so daß die Saugrohre 7, 8 lediglich einen horizontalen Abstand zwischen dem Luftsammler 6 und den Zylinder-Lufteinlässen 24, 25 überbrücken müssen.

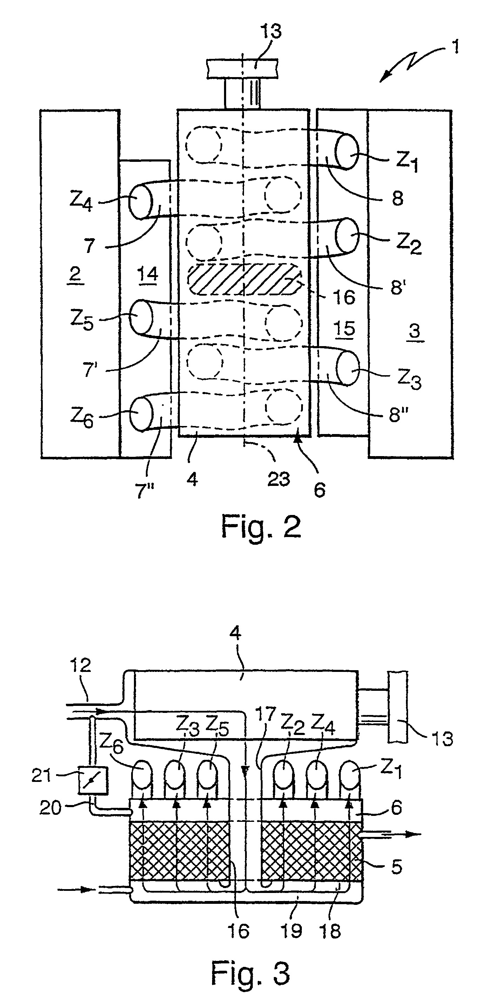

Wie der Darstellung nach Fig. 2 zu entnehmen, handelt es sich im gezeigten Ausführungsbeispiel um einen V-6-Motor, bei dem jeder Zylinderbank 2, 3 jeweils drei Zylinder Z₁, Z₂, Z₃ bzw. Z₄, Z₅, Z₆ zugeordnet sind. Der Lader 4 erstreckt sich in Längsrichtung des Motors, wobei die Motor-Längsrichtung zugleich in der Längsmittelebene 23 liegt. Die Antriebsscheibe 13 an einer Stirnseite des Laders ist als Riemenscheibe ausgebildet und wird über einen nicht dargestellten Riemen von der Kurbelwelle des Motors angetrieben.

Der Zylinderanzahl entsprechend sind sechs Saugrohre 7, 7', 7'' bzw. 8, 8',8'' vorgesehen, die den Luftsammler 6 zwischen dem Lader 4 und dem Ladeluftkühler 5 mit den Zylindern Z₁ bis Z₆ verbindet. Unmittelbar benachbarte Saugrohre sind jeweils zu gegenüberliegenden Zylinderbänken 2, 3 geführt. Die der zylinderbank 2 zugeführten Saugrohre 7, 7', 7'' sind auf der der gegenüberliegenden Zylinderbank 3 zugewandten Seite mit dem Luftsammler 6 verbunden; in entsprechender Weise liegt die Verbindung zwischen den der Zylinderbank 3 zugeführten Saugrohren 8, 8' und 8'' und dem Luftsammler 6 im Bereich der der Zylinderbank 2 zugewandten Seite des Luftsammlers, so daß benachbarte Saugrohre diesseits bzw. jenseits der Längsmittelebene 23 vom Luftsammler 6 abzweigen. Durch diese Zuordnung ergibt sich, wie auch Fig. 1 zu entnehmen, eine geringfügig größere horizontale Distanz zwischen einem Auslaß des Luftsammlers und dem zugeordneten Zylinder, wodurch die Krümmung des entsprechenden Saugrohres geringer gehalten werden kann und sich ein gleichmäßigeres Strömungsprofil im Saugrohr ausbilden kann.

Aus Fig. 2 geht auch hervor, daß jeder Zylinderbank 2, 3 jeweils ein Ansaugflansch 14, 15 zugeordnet ist, in den die Saugrohre 7, 7', 7'' bzw. 8, 8', 8'' münden. Über die Ansaugflansche 14, 15 wird die Ladeluft den Zylindereinlässen der einzelnen Zylinder zugeführt.

Im Ladeluftkühler ist unterhalb des Laders 4 eine vertikal verlaufende Ausnehmung 16 vorgesehen, die in Längsrichtung des Laders 4 gesehen zwischen dem dritten und dem vierten Saugrohr zentral in der Mitte des Laders bzw. Ladeluftkühlers liegt. Gemäß Fig. 3 erstreckt sich die Ausnehmung 16 durch den Luftsammler 6 und die gesamte Höhe des Ladeluftkühlers 5 bis zum Luftverteiler 19. Durch die Ausnehmung 16 ist eine Ladeluftleitung 17 geführt, über die im Lader 4 verdichtete Ladeluft senkrecht nach unten in den Luftverteiler 19 des Ladeluftkühlers 6 geleitet wird. Vom Luftverteiler 19 strömt die Ladeluft durch den Ladeluftkühler 5 nach oben, wird im Ladeluftkühler gekühlt und mündet in den Luftsammler 6 auf der Oberseite des Ladeluftkühlers.

Der Ladeluftkühler 5 ist als Wasser-Luft-Ladeluftkühler ausgebildet und verwendet Wasser als Kühlmedium. Das Kühlmedium wird horizontal in Längsrichtung des Motors durch den Ladeluftkühler 5 geleitet. Die Strömungsrichtung des Kühlmediums verläuft im Ausführungsbeispiel in gleicher Richtung wie die Einströmung der Verbrennungsluft durch die Luftzufuhrleitung 12 in den Lader 4; die Strömungsrichtung des Kühlmediums kann gegebenenfalls aber auch in Gegenrichtung verlaufen.

Von der Luftzufuhrleitung 12, die auf der der Antriebsscheibe 13 gegenüberliegenden Seite des Laders 4 angeordnet ist, verzweigt stromauf des Laders 4 ein Bypass 20 zum Luftsammler 6. Der Bypass ist über ein Absperrventil 21 zu öffnen und zu schließen. In Öffnungsstellung des Absperrventils 21 kommuniziert die Luftzufuhrleitung 12 unmittelbar mit dem Luftsammler 6, so daß unter Atmosphärendruck stehende Verbrennungsluft dem Luftsammler 6 zugeführt wird. Diese Ausführung wird zweckmäßig für den Fall realisiert, daß die Drosselklappe des Motors stromauf des Laders angeordnet ist.

Es kann aber auch zweckmäßig sein, die Drosselklappe des Motors in der senkrecht nach unten durch den Ladeluftkühler geführten Ladeluftleitung 17 anzuordnen.

## Patentansprüche

1. Brennkraftmaschine in V-Bauweise mit einem mechanisch angetriebenen Lader, der im wesentlichen zwischen V-förmigen Zylinderbänken (2, 3) der Brennkraftmaschine (1) angeordnet ist, mit einem dem Lader (4) nachgeordneten Ladeluftkühler (5), der einen auslaßseitigen Luftsammler (6) aufweist, welcher über Saugrohre (7, 8) mit den Lufteinlässen (24, 25) der Zylinder (Z₁ bis Z₆) beider Zylinderbänke (2, 3) verbunden ist,
**dadurch gekennzeichnet,**
**daß** der Lader (4) und der Ladeluftkühler (5) eine vormontierte Baueinheit (9) bilden, wobei in Einbaulage der Lader (4) oberhalb des Ladeluftkühlers (5) liegt und der Luftsammler (6) auf der Oberseite (10) des Ladeluftkühlers (5), jedoch unterhalb des Laders (4) zwischen den V-förmigen Zylinderbänken (2, 3) angeordnet ist.

2. Brennkraftmaschine nach Anspruch 1,
**dadurch gekennzeichnet,**
**daß** eine Ladeluftleitung (17) zwischen dem Lader (4) und dem Ladeluftkühler (5) zu einem auf der Unterseite (18) des Ladeluftkühlers (5) liegenden einlaßseitigen Luftverteiler (19) des Ladeluftkühlers (5) geführt ist.

3. Brennkraftmaschine nach Anspruch 2,
**dadurch gekennzeichnet,**
**daß** die Ladeluftleitung (17) zwischen dem Lader (4) und dem Ladeluftkühler (5) durch eine zentrale Ausnehmung (16) im Ladeluftkühler (5) geführt ist.

4. Brennkraftmaschine nach einem der Ansprüche 1 bis 3,
**dadurch gekennzeichnet,**
**daß** ein den Lader (4) überbrückender, absperrbarer Bypass (20) zwischen einer Luftzufuhrleitung (12) zum Lader (4) und dem Luftsammler (6) des Ladeluftkühlers (5) vorgesehen ist.

5. Brennkraftmaschine nach einem der Ansprüche 1 bis 4,
**dadurch gekennzeichnet,**
**daß** benachbarte Saugrohre (7, 7', 7''; 8, 8', 8'') zwischen dem Luftsammler (6) des Ladeluftkühlers (5) und den Lufteinlässen (24, 25) der Zylinder (Z₁ bis Z₆) alternierend zu jeweils einer der beiden Zylinderbänke (2, 3) geführt sind.

6. Brennkraftmaschine nach einem der Ansprüche 1 bis 5,
**dadurch gekennzeichnet,**
**daß** die Luftzufuhrleitung (12) zum Lader (4) auf der seiner Antriebsscheibe (13) gegenüberliegenden Seite angeordnet ist.

7. Brennkraftmaschine nach einem der Ansprüche 1 bis 6,
**dadurch gekennzeichnet,**
**daß** der Luftsammler (6) des Ladeluftkühlers (5) und der Lufteinlaß (24, 25) eines Zylinders (Z₁ bis Z₆) etwa in einer gemeinsamen horizontalen Ebene (11) liegen.

8. Brennkraftmaschine nach einem der Ansprüche 1 bis 7,
**dadurch gekennzeichnet,**
**daß** der Winkel (α) zwischen den V-förmig angeordneten Zylinderbänken (2, 3) zumindest 60° beträgt.

9. Brennkraftmaschine nach einem der Ansprüche 1 bis 8,
**dadurch gekennzeichnet,**
**daß** die Strömungsrichtung des Kühlmediums des Ladeluftkühlers (5) in Motor-Längsrichtung verläuft.

## Claims

1. Internal combustion engine in a V-form design, with a mechanically driven supercharger, which is substantially disposed between V-shaped banks of cylinders (2,3) of the internal combustion engine (1), with a supercharger intercooler (5), which is inserted after the supercharger (4), which has an air accumulator (6), on the exhaust side, which is connected, by means of induction pipes (7, 8), to the air intakes (24, 25) of the cylinders (C₁ to C₆) of both banks of cylinders (2, 3),
**characterized in that**
the supercharger (4) and the supercharger intercooler (5) form an individual part (9) whereby, in the assembled state, the supercharger (4) is placed above the supercharger intercooler (5) and the air accumulator (6) is disposed on the upper side (10) of the supercharger intercooler (5), but below the supercharger (4), between the V-form banks of cylinders (2, 3).

2. Internal combustion engine in accordance with claim 1,
**characterized in that**
a pressure pipe (17) is directed between the supercharger (4) and the supercharger intercooler (5) to an air distributor (19), of the supercharger intercooler (5), on the underside (18) of the supercharger intercooler (5).

3. Internal combustion engine in accordance with claim 2,
**characterized in that**
the pressure pipe (17) is directed between the supercharger (4) and the supercharger intercooler (5) through a central clearance (16), into the supercharger intercooler (5).

4. Internal combustion engine in accordance with one of claims 1 to 3,
**characterized in that**
a bypass (20), which can be shut off and which bridges the supercharger (4), is provided between an air supply conduit (12) going to the supercharger (4) and the air accumulator (6) of the supercharger intercooler (5).

5. Internal combustion engine in accordance with one of claims 1 to 4,
**characterized in that**
adjacent induction pipes (7, 7', 7"; 8, 8', 8") are alternately directed, between the air accumulator (6) of the supercharger intercooler (5) and the air intakes (24, 25) of the cylinders (C₁ to C₆), to in each case one of the two banks of cylinders (2, 3).

6. Internal combustion engine in accordance with one of claims 1 to 5,
**characterized in that**
the air supply conduit (12) to the supercharger (4) is disposed on its side which is opposite its driving wheel (13).

7. Internal combustion engine in accordance with one of claims 1 to 6,
**characterized in that**
the air accumulator (6) of the supercharger intercooler (5) and the air intake (24, 25) of a cylinder (C₁ to C₆) roughly lie in a common, horizontal plane (11).

8. Internal combustion engine in accordance with one of claims 1 to 7,
**characterized in that**
the angle (α) between the banks of cylinders (2, 3), which form a 'V', is at least 60°.

9. Internal combustion engine in accordance with one of claims 1 to 8,
**characterized in that**
the direction of flow of the coolant, of the supercharger intercooler (5), runs in the transverse direction of the engine.

## Revendications

1. Moteur à combustion interne à structure en V comportant un compresseur à entraînement mécanique qui est agencé sensiblement entre les rangées de cylindres (2, 3) en forme de V du moteur à combustion interne (1), comportant un refroidisseur d'air chargé (5) agencé en aval du compresseur (4) et muni d'un collecteur d'air (6) du côté sortie, qui est relié via des tubes d'aspiration (7, 8) aux entrées d'air (24, 25) des cylindres (Z₁ à Z₆) des deux rangées de cylindres (2, 3), **caractérisé en ce que** le compresseur (4) et le refroidisseur d'air (5) forment une unité structurelle (9) préassemblée, et en position montée le compresseur (4) se situe au-dessus du refroidisseur d'air (5) et le collecteur d'air (6) est agencé sur la face supérieure (10) du refroidisseur d'air (5), mais au-dessous du compresseur (4) entre les rangées de cylindres (2, 3) en forme de V.

2. Moteur à combustion interne selon la revendication 1, **caractérisé en ce qu'**une conduite à air chargé (17) entre le compresseur (4) et le refroidisseur d'air (5) mène à un distributeur d'air (19), côté entrée du refroidisseur d'air (5), qui est situé sur la face inférieure (18) du refroidisseur d'air (5).

3. Moteur à combustion interne selon la revendication 2, **caractérisé en ce que** la conduite à air chargé (17) entre le compresseur (4) et le refroidisseur d'air (5) est menée à travers un évidement central (16) dans le refroidisseur d'air (5).

4. Moteur à combustion interne selon l'une des revendications 1 à 3, **caractérisé en ce qu'**il est prévu un by-pass (20) obturable contournant le compresseur (4) entre une conduite d'amenée d'air (12) vers le compresseur (4) et le collecteur d'air (6) du refroidisseur d'air (5).

5. Moteur à combustion interne selon l'une des revendications 1 à 4, **caractérisé en ce que** des tubes d'aspiration voisins (7, 7', 7" ; 8, 8', 8") entre le collecteur d'air (6) du refroidisseur d'air (5) et les entrées d'air (24, 25) des cylindres (Z₁ à Z₆) sont menés en alternance à l'une des deux rangées de cylindres respectives (2, 3).

6. Moteur à combustion inteme selon l'une des revendications 1 à 5, **caractérisé en ce que** la conduite d'amenée d'air (12) vers le compresseur (4) est agencée sur le côté opposé à son disque d'entraînement (13).

7. Moteur à combustion interne selon l'une des revendications 1 à 6, **caractérisé en ce que** le collecteur d'air (6) du refroidisseur d'air (5) et l'entrée d'air (24, 25) d'un cylindre (Z₁ à Z₆) se trouvent approximativement dans un plan horizontal commun (11).

8. Moteur à combustion interne selon l'une des revendications 1 à 7, **caractérisé en ce que** l'angle (α) entre les rangées de cylindre (2, 3) agencées en forme de V est d'au moins 60°.

9. Moteur à combustion interne selon l'une des revendications 1 à 8, **caractérisé en ce que** la direction d'écoulement du fluide réfrigérant du refroidisseur d'air (5) s'étend en direction longitudinale du moteur.
